Europäisches Patentamt

European Patent Office

Office européen des brevets

(11) Veröffentlichungsnummer: **0 167 970**

**A1**

(12) # EUROPÄISCHE PATENTANMELDUNG

(21) Anmeldenummer: 85108189.3

(22) Anmeldetag: 22.10.81

(51) Int. Cl.⁴: **G 02 F 1/33**

(30) Priorität: **16.04.81 DE 3115562**

(43) Veröffentlichungstag der Anmeldung:
**15.01.86 Patentblatt 86/3**

(84) Benannte Vertragsstaaten:
**DE FR GB**

(60) Veröffentlichungsnummer der früheren
Anmeldung nach Art. 76 EPÜ: **0 063 175**

(71) Anmelder: **Siemens Aktiengesellschaft
Berlin und München Wittelsbacherplatz 2
D-8000 München 2(DE)**

(72) Erfinder: **Kersten, Ralf Thomas, Prof., Dr.-Phil.
Hildegardstrasse 2a
D-1000 Berlin 31(DE)**

(72) Erfinder: **Von Helmolt, Clemens, Dipl.-Ing.
Schlüterstrasse 7
D-1000 Berlin 12(DE)**

(72) Erfinder: **Schlaak, Helmut F., Dipl.-Ing.
Saatwinkler Damm 139
D-1000 Berlin 13(DE)**

(54) **Optischer Modulator, Verfahren zu seinem Betrieb und seine Verwendung.**

(57) Optischer Modulator, Verfahren zu seinem Betrieb und seine Verwendung.

Ein optischer Modulator mit mindestens einer monomodalen passiven integriert-optischen Wellenleiter-Anordnung soll ohne aufwendige Justierung der Steuereinrichtung hergestellt werden. Diese Aufgabe wird erfindungsgemäß durch einen optischen Modulator mit mindestens einer monomodalen passiven integriert-optischen Wellenleiter-Anordnung gelöst, welche mindestens eine Vorrichtung (IDT) aufweist, welche akustische Oberflächenwellen (SAW) erzeugt, wobei diese akustischen Oberflächenwellen (SAW) mindestens eine integriert-optische Wellenleiter-Anordnung modulieren.

FIG 4

EP 0 167 970 A1

SIEMENS AKTIENGESELLSCHAFT Unser Zeichen

Berlin und München          VPA        81 P 8 0 1 8 E 01

0167970

## Optischer Modulator, Verfahren zu seinem Betrieb und seine Verwendung.

Die Erfindung betrifft einen optischen Modulator nach dem Oberbegriff des Patentanspruchs 1, ein Verfahren zu seinem Betrieb und seine Verwendung.

Optische Modulatoren mit mindestens einer monomodalen passiven integriert-optischen Wellenleiter-Anordnung werden nach dem Stand der Technik von elektrischen Feldern geschaltet. Bekannt ist ein solcher elektrooptischer Modulator als integriert-optisches Interferometer (R. Keil et al, Siemens Forschungs- u. Entwicklungsberichte, Bd. 9(1980), 26-32). Ebenso ist ein solcher elektrooptischer Modulator als integriert-optischer Richtkoppler bekannt (E. Fuhrmann et al, Siemens Forschungs- u. Entwicklungsberichte, Bd.9(1980), 163-167). Bei diesen bekannten elektrooptischen Modulatoren müssen während der Fertigung die Steuerelektroden in bezug auf die Wellenleiter aufwendig justiert werden. Außerdem müssen für jeden Wellenleiter eigene Störelektroden angebracht werden.

Der vorliegenden Erfindung liegt die Aufgabe zugrunde, einen optischen Modulator der eingangs genannten Art anzugeben, welcher ohne aufwendige Justierung der Steuereinrichtung hergestellt werden kann.

Diese Aufgabe wird erfindungsgemäß durch einen optischen Modulator der eingangs genannten Art gelöst, welcher die kennzeichnenden Merkmale des Anspruchs 1 aufweist.

My 1 Bla / 7.4.1981

81 P 8018 E 01
0167970

Ein Vorteil dieses erfindungsgemäßen optischen Modulators ist, daß eine einzige akustische Oberflächenwelle viele monomodale passive integriert-optische Wellenleiter-Anordnungen modulieren kann.

Ein passiver optischer Richtkoppler, welcher von einer akustischen Oberflächenwelle geschaltet wird, wird als SAWDIC (surface acoustic wave driven directional coupler) bezeichnet.

Ein passives integriert-optisches Interferometer, welches von einer akustischen Oberflächenwelle geschaltet wird, wird als SAWDIF (surface acoustic wave driven interferometer) bezeichnet.

Das SAWDIF kann aus sämtlichen monomodalen, integriert-optischen Interferometern, z.B. vom Mach-Zehnder Typ, aufgebaut werden.

Zur Erzeugung von akustischen Oberflächenwellen weist der optische Modulator mindestens einen Interdigital-Wandler auf.

Bei einem SAWDIC kann der Abstand der beiden Wellenleiter eines passiven optischen Richtkopplers gleich der akustischen Wellenlänge oder einem ganzzahligen Vielfachen davon sein. Vorteilhafterweise ist der Abstand der beiden Wellenleiter eines passiven optischen Richtkopplers bei einem SAWDIC gleich der halben akustischen Wellenlänge oder einem ungeradzahligen ganzzahligen Vielfachen davon. In letzterem Fall kann auch noch ein Interdigital-Wandler gegenüber mindestens einem passiven optischen Richtkoppler um einen Winkel gedreht sein. Bei einem SAWDIC können die Wellenleiter eines passiven optischen Richtkopplers parallel und gerade oder parallel

0167970

81 P 8018 E 01

und gekrümmt oder gegeneinander gekrümmt verlaufen.

Ein SAWDIC kann mit mindestens einem elektrooptischen Richtkoppler-Modulator, insbesondere mit einem Δß-Reversal-Koppler, gekoppelt werden.

Ein SAWDIC kann für Modulation und Demodulation im Frequenzmultiplex verwendet werden.

Bei einem SAWDIF ist der Abstand der beiden Wellenleiter eines passiven integriert-optischen Interferometers vorzugsweise gleich der halben akustischen Wellenlänge oder einem ungeradzahligen ganzzahligen Vielfachen davon. Im optimalen optischen Arbeitspunkt kann die Frequenzmodulation bei einem SAWDIF so linear wie möglich erfolgen. Vorteilhafterweise kann bei einem SAWDIF die statische Phasenverschiebung zwischen zwei Interferometerarmen elektrisch gesteuert werden. Mit einem aktiven Leistungskoppler kann bei einem SAWDIF die Lichtleistung in zwei Interferometerarmen genau eingestellt werden. Zur Erhöhung der Bandbreite kann bei einem SAWDIF der Abstand zweier Interferometerarme in kontinuierlicher Änderung verlaufen. Vorteilhafterweise kann bei einem SAWDIF zwischen zwei Interferometerarmen eine Metall-Auflage aufgebracht werden, welche bei allen Frequenzen eine maximale Modulationstiefe bewirkt.

Die akustische Oberflächenwelle kann frei auf dem Substrat laufen oder an einen akustischen Wellenleiter gebunden sein. Ferner ist ein Resonator-Betrieb der akustischen Oberflächenwelle möglich, der infolge der stehenden Welle einen höheren Wirkungsgrad bei geringerer Bandbreite hervorruft. Zur Signalverarbeitung und Signalformung können mehrere akustische Oberflächenwellen verwendet werden.

Vorteilhafte Ausgestaltungen der Erfindung sind anhand
von verschiedenen Ausführungsbeispielen in der Zeichnung
dargestellt und werden im folgenden näher erläutert.

Fig.1 zeigt eine Draufsicht auf einen SAWDIC, bestehend
aus Richtkoppler (DIC) und einem Interdigital-Wandler (IDT).

Fig.2 zeigt einen Querschnitt durch den Richtkoppler von

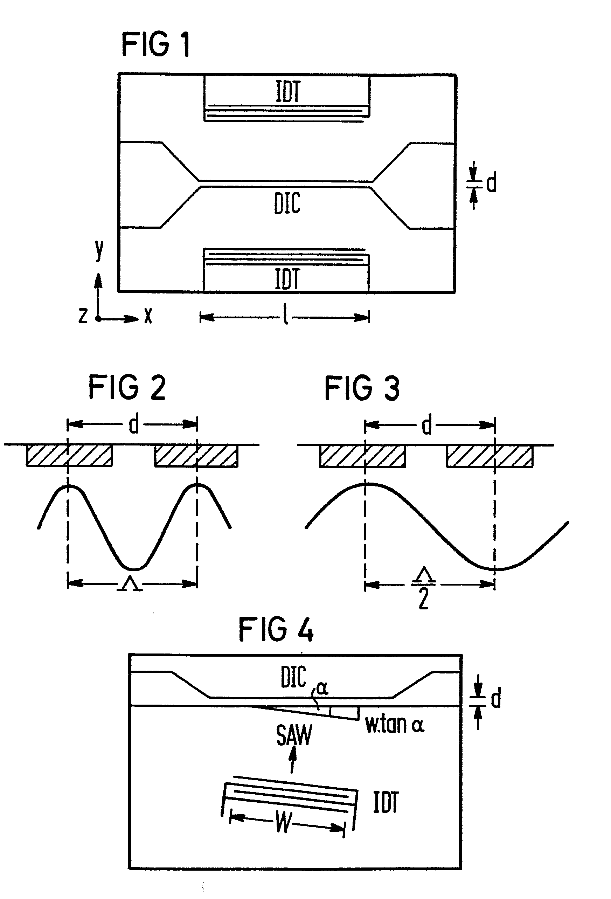

Fig.1, und zwar bei Grundwellenmodulation.

Fig.3 zeigt einen Querschnitt durch den Richtkoppler von
Fig.1 bei Oberwellenmodulation.

Fig.4 zeigt einen SAWDIC im $\Delta\beta$-Reversal-Betrieb.

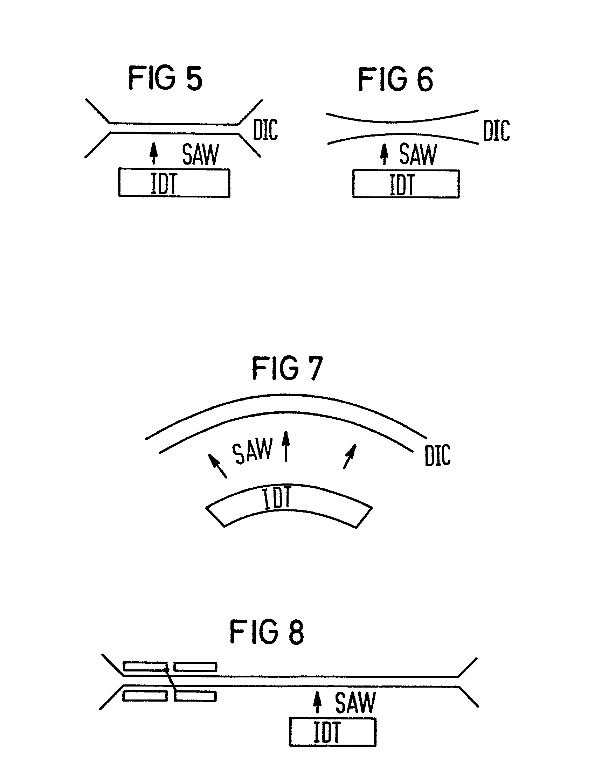

Fig.5 zeigen verschiedene Ausführungsformen des SAWDIC.
bis 7

Fig.8 zeigt einen SAWDIC, welcher an einen $\Delta\beta$-Reversal-
Koppler gekoppelt ist.

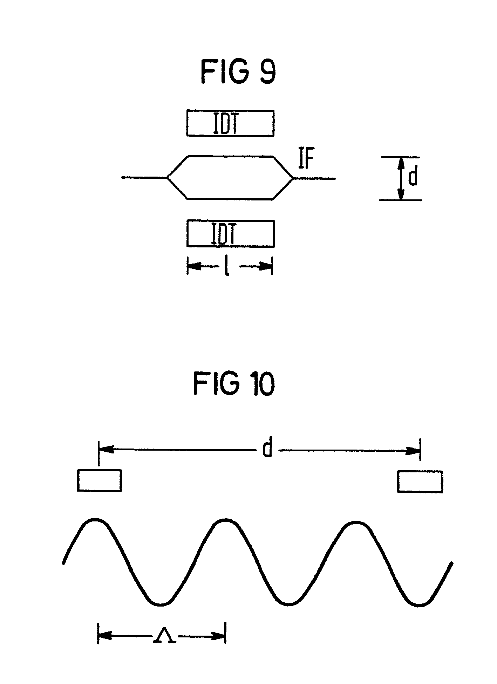

Fig.9 zeigt eine Draufsicht auf ein SAWDIF, bestehend
aus Interferometer und Interdigital-Wandler (IDT).

Fig.10 zeigt einen Querschnitt durch das Interferometer
von Fig.9.

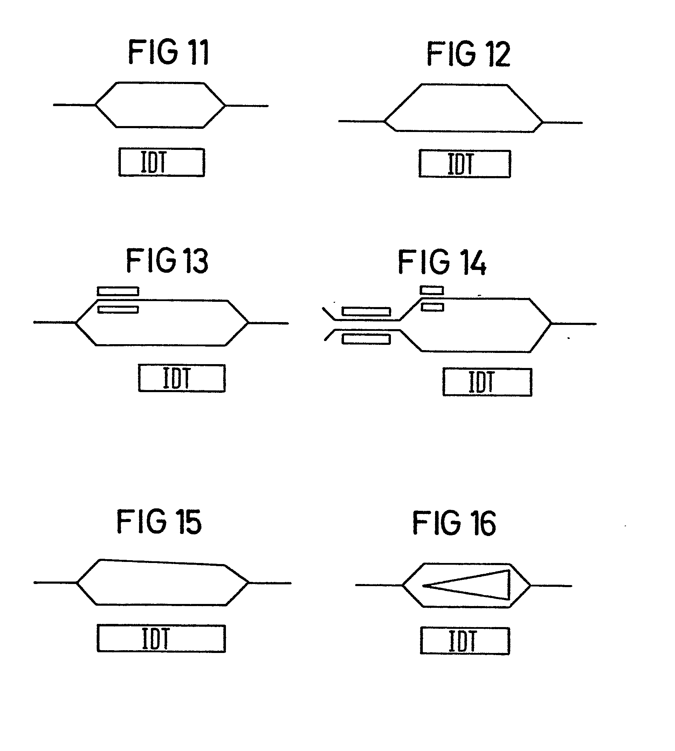

Fig.11 zeigen verschiedene Ausführungsformen des SAWDIF.
bis 16

Ein optischer Modulator, bei dem ein passiver optischer
Richtkoppler DIC (M. Papuchon: III. Topical Meeting on
Integrated Optics, Salt Lake City, 12-14. Jan. 1976,
paper TuA 1) von einer akustischen Oberflächenwelle
SAW geschaltet wird, wird als SAWDIC bezeichnet.  Der

0167970
81 P 8018 E 01

Aufbau eines derartigen optischen Modulators ist aus sämtlichen Materialien möglich, welche die Herstellung optischer Streifenwellenleiter, z.B. durch Eindiffusion von Fremdatomen, ermöglichen und selbst piezoelektrisch sind, z.B. Lithiumniobat, bzw. wenn sie nicht selbst piezoelektrisch sind, das Aufbringen einer piezoelektrischen Schicht aus z.B. Zinkoxid zulassen.

Den grundsätzlichen Aufbau des SAWDIC zeigt Fig.1 im Schema. Ein SAWDIC enthält einen oder mehrere passive optische Richtkoppler DIC der Länge L sowie einen oder auch mehrere Interdigital-Wandler IDT, welche auf eine gewünschte Mittenfrequenz und Bandbreite optimiert sind (A.J. Slobodnik jr.: Proc. IEEE 64 (1976) 5, 581-593). Als Substratmaterial wird dabei z.B. ein z-geschnittener Lithiumniobat-Kristall verwendet, wobei die akustische Oberflächenwelle SAW in y-Richtung läuft. Die optischen Wellenleiter sind dabei z.B. durch Eindiffusion von Titan hergestellt. Die Abmessungen der Wellenleiter und die Diffusionsparameter sind für Monomode-Betrieb bei charakteristischen Wellenlängen der verwendeten Lichtquellen optimiert. Die Ausgangslichtleistung $P_2$ eines passiven monomodalen Kopplers ist mit

$$P_2 = P_{0_1} \ \left(1+\left(\frac{\Delta\beta}{2c}\right)^2\right)^{-1} \ \sin^2\left(c \cdot \ell \sqrt{1+\left(\frac{\Delta\beta}{2c}\right)^2}\right) \qquad (1)$$

gegeben, wobei $P_{0_1}$ die Eingangslichtleistung, $\Delta\beta=\beta_1-\beta_2$ die absolute Differenz der Phasenkonstanten $\beta_1$ und $\beta_2$ der beiden Wellenleiter des passiven monomodalen Kopplers sowie c den Doppelkoeffizienten bedeuten.

Läuft eine akustische Oberflächenwelle SAW quer durch die Kopplerstruktur, wie sie in Fig.1 dargestellt ist, so lassen sich nach Fig.2 und nach Fig.3, die den optischen Richtkoppler im Querschnitt zeigen, zwei Effekte unterscheiden. In Fig.2 ist das Prinzip der Grundwellenmodulation dargestellt, welche einem Gleichtaktbetrieb entspricht: Der Abstand d der beiden Wellenleiter des optischen Richtkopplers ist gleich der akustischen Wellenlänge $\Lambda$ oder einem ganzzahligen Vielfachen davon. Der optische Richtkoppler wird bei Grundwellenmodulation über die Brechungsindex-Änderung $n_1 \pm \Delta n(P_{ac})$ und damit über eine Änderung des Kopplungskoeffizienten $c \pm \Delta c(P_{ac})$ mit der akustischen Leistung $P_{ac}$ verstimmt. Unter der Annahme, daß die absolute Differenz der Phasenkonstanten $\Delta \beta = 0$ sowie unter der Annahme, daß $\Delta c \sim P_{ac}$ ist, folgt

$$P_2 = P_{0_1} \sin^2(\ell(c+\Delta c)) = \sin^2(\ell(c+k_1 P_{ac})) \qquad (2)$$

mit $k_1$ als Proportionalitätsfaktor. Der Modulationswirkungsgrad ist bei der Grundwellenmodulation relativ niedrig, da sich bei der Grundwellenmodulation $\Delta c$ nur gering ändert.

Die Wirkungsweise einer Modulation des optischen Richtkopplers mit der ersten Oberwelle, welche einem Gegentakt-Betrieb entspricht, ist der Fig.3 zu entnehmen. Bei einem Gegentakt-Betrieb entspricht der Abstand d der beiden Wellenleiter des optischen Richtkopplers der halben akustischen Wellenlänge oder einem ungeradzahligen Vielfachen davon. Bei einem solchen Gegentakt-Betrieb wird die Koppler-Charakteristik über eine Änderung der absoluten Differenz der Phasenkonstanten, nämlich $\pm \Delta \beta$, geändert. Unter der Voraussetzung, daß $|\Delta \beta| \sim P_{ac}$, folgt:

$$P_2 = P_{0_1}(1+(k_2 P_{ac})^2)^{-1} \sin^2(c \cdot \ell \sqrt{1+(k_2 P_{ac})^2}) \, , \qquad (3)$$

wobei wiederum ein Proportionalitätsfaktor $k_2$ eingeführt

0167970

81 P 8018 E 01

worden ist. Bei Aufstellung dieser Gleichung wurde angenommen, daß der Richtkoppler keine intrinsische Differenz
der Phasenkonstanten $\Delta\beta$ besitzt. Wenn jedoch infolge
von Wellenleiterinhomogenitäten eine konstante Differenz
der Phasenkonstanten $\Delta\beta$ verschieden von Null vorhanden
ist, treten Grund- und Oberwellenmodulation gleichzeitig
auf.

Wird ein Interdigital-Wandler IDT gegenüber dem optischen Richtkoppler um den Winkel $\alpha$ gedreht, wie es in
Fig.4 dargestellt ist, arbeitet der SAWDIC im $\Delta\beta$-Reversal-
Betrieb (H. Kogelnik: Switched directional couplers with
alternating $\Delta\beta$, IEEE J. Quant. Electr., QE-12 (1976), 7,
396-401). Wenn W die akustische Apertur des Interdigital-
Wandlers IDT darstellt, treten über die Länge des optischen Richtkopplers DIC verteilt mit wechselndem Vorzeichen

$$p = 2W\Lambda^{-1}\tan\alpha \qquad (4)$$

verschiedene $\Delta\beta$-Stufen auf. Die Modulationsfrequenz $f_{mod}$
beträgt hierbei

$$f_{mod} = 2\ f_{ac}\sin\alpha\ , \qquad (5)$$

wobei $f_{mod}$ die Frequenz der akustischen Oberflächenwelle
SAW bedeutet.

Die akustische Anregung des optischen Richtkopplers DIC
mit höheren Frequenzen als der Grundwelle ist möglich,
doch sinkt mit steigender Ordnung der Oberwelle der Modulationswirkungsgrad.

Eine Meßanordnung besteht z.B. aus zwei Lichtquellen
(ein HeNe-Laser mit der Wellenlänge von 0.633 $\mu$m und

ein Nd-YAG-Laser mit der Wellenlänge von 1.3 µm), einer optischen Richtungskopplung und einer Detektoranordnung (Si- und Ge-Lawinenfotodioden). Das von den Detektoren empfangene optische Signal wird mit Hilfe eines Spektralanalysators ausgewertet.

Experimente wurden mit TE-Wellen durchgeführt. Bei einer Grundwellenmodulation gemäß Fig.2 wurde eine akustische Wellenlänge von $\Lambda$= 10 µm zusammen mit optischen Richtkopplern verwendet, welche einen Wellenleiterabstand $d \leq \Lambda$ aufwiesen. Die Grundwellenmodulation wurde bei einer optischen Wellenlänge von 1.3 µm durchgeführt. Die Lichtleistung an der Eingangskoppellinse betrug etwa 0 mW. Das grundwellenmodulierte optische Signal, welches vom SAWDIC erzeugt wurde, wurde von der Detektoranordnung erfaßt. Die Modulationstiefe betrug nur etwa 4,5%, was der theoretischen Erwartung entspricht. Eine Oberwellenmodulation konnte dabei nicht festgestellt werden.

Für eine Oberwellenmodulation gemäß Fig.3 wurde eine akustische Wellenlänge $\Lambda$ = 20 µm (entspricht 180 MHz) gewählt. Dabei wurden optische Richtkoppler, bei denen der Wellenleiterabstand d 10 µm beträgt, mit Hilfe eines HeNe-Laser mit TE-Polarisation angeregt. Die Lichtleistung an der Eingangskoppellinse betrug dabei 18 Mikrowatt. Der verwendete Laser weist eine innere Amplitudenmodulation von 80% bei 640 MHz auf. Im Spektrum des von der Detektoranordnung empfangenen optischen Signals wurde die Modulationsfrequenz des HeNe-Laser, die Oberwellenmodulationsfrequenz des SAWDIC bei 360 MHz, die Grundwellenmodulationsfrequenz des SAWDIC infolge eines konstanten intrinsischen $\Delta\beta$ des optischen Richtkopplers sowie Mischfrequenzen zwischen diesen drei Frequenzen gefunden. Ein Vergleich der Leistung der Modulations-

81 P 8078 E 01    0167970

frequenz des HeNe-Laser mit der Leistung der Oberwellenmodulationsfrequenz des SAWDIC bei 360 MHz ergab einen Modulationswirkungsgrad des SAWDIC für die Modulation mit der ersten Oberwelle von 100%. Experimentell wurde beim SAWDIC eine 3 dB-Breite der ersten Oberwellen von 30 MHz gemessen.

Der SAWDIC läßt sich aus sämtlichen Arten von Richtkopplern z.B. nach Figuren 5, 6 und 7 in Grund- und Oberwellenmodulation aufbauen. Mit den optischen Richtkopplern nach Fig.5 und Fig.6 ist der Δß-Reversal-Betrieb möglich. Der optische Richtkoppler DIC nach Fig.6 hat zwar einen geringeren Wirkungsgrad als der optische Richtkoppler DIC nach Fig.5, ermöglicht jedoch eine höhere Bandbreite als der optische Richtkoppler nach Fig.5.

Die akustische Oberflächenwelle SAW kann frei auf dem Substrat laufen oder an einen akustischen Wellenleiter (A.A. Oliner: Topics in Appl. Physics, Acoustic Surface Waves, Springer-Verlag, Berlin (1978)) gebunden sein. Ferner ist der Resonatorbetrieb der akustischen Oberflächenwelle SAW möglich, der infolge der stehenden Welle einen höheren Wirkungsgrad bei geringer Bandbreite hervorruft. Zur Signalverarbeitung und -formung können mehrere unter dem Winkel $0 < \alpha < 360°$ laufende akustische Oberflächenwellen verwendet werden.

Die Interdigital-Wandler IDT für die bisher angeführten Varianten des SAWDIC lassen sich nach den in den Veröffentlichungen A.J. Slobodnik, Jr., A.A. Oliner und in der Veröffentlichung M. Yamaguchi et al: Waveguidetype s.a.w. filter using energy focusing interdigital transducer, Microw., Opt. and Acoust., Vol.3 (1979), 4, 161-168 genannten Verfahren aufbauen und optimieren. Je nach Anwendung des SAWDIC werden ein bzw. zwei Interdigital-Wandler IDT sowie ein Reflektor (A.A. Oliner, aaO) benötigt.

Der SAWDIC läßt sich mit sämtlichen elektrooptischen Richtkoppler-Modulatoren je nach Anwendungsfall kombinieren, siehe z.B. Fig. 8. Die in Fig.8 gezeigte Kombination aus einem Δß-Reversal-Koppler und dem SAWDIC ist insofern vorteilhaft, als mit dem Δß-Reversal-Koppler der optimale optische Arbeitspunkt des SAWDIC eingestellt werden kann.

Der SAWDIC läßt sich einsetzen z.B. zu Modulation und Demodulation im Frequenzmultiplex. Zur Modulation wird wiederum ein elektrooptischer ΔB-Reversal-Koppler mit einem SAWDIC kombiniert, wie in Fig.8 gezeigt. Das Licht wird mit dem zu übertragenden Basisband elektrooptisch moduliert, sodann wird mit Hilfe des SAWDIC der Träger zugesetzt und das Basisband in die gewünschte Frequenzlage gebracht. Zur Unterdrückung des Basisbandes müßte anschließend ein geeignetes optisches Filter (M. Jamil et al: Proposed interferometric filters, Appl. Optics, Vol.19 (1980), 18, 3051-3052) folgen. Die Demodulation, bei der die Rücksetzung der übertragenen Zeitfunktion ins Basisband erfolgt, kann von einem weiteren SAWDIC vorgenommen werden, der mit der Trägerfrequenz betrieben wird.

Der SAWDIC bietet gegenüber elektrooptischen Modulatoren den Vorteil, daß einerseits während der Fertigung keine aufwendige Justierung des Interdigital-Wandlers IDT in bezug auf die Wellenleiter erforderlich ist und zum anderen, daß eine einzige akustische Oberflächenwelle SAW viele Richtkoppler, im durchgeführten Experiment bis zu 14 optische Richtkoppler, modulieren kann.

0167970

81 P 8 0 1 8 E 01

Den grundsätzlichen Aufbau eines Interferometers, das von einer akustischen Oberflächenwelle geschaltet wird, SAWDIF, zeigt Fig.9 im Schema. Das SAWDIF enthält einen oder mehrere passive integriert-optische Interferometer IF (W.E. Martin, Appl. Phys. Lttrs., 26, 562 (1975)) und einen oder mehrere Interdigital-Wandler IDT. Für die Materialien, aus denen der Aufbau eines SAWDIF möglich ist, gilt das für die Materialien zum Aufbau eines SAWDIC gesagte in gleicher Weise.

Das in Fig.9 gezeigte SAWDIC enthält ein Mach-Zehnder-Interferometer IF der Länge $\ell$ und dem Abstand d der Wellenleiterarme sowie einen Interdigital-Wandler IDT, der auf eine gewünschte Mittenfrequenz und Bandbreite optimiert ist (A.J. Slobodnik, Jr., aaO). Die Ausgangslichtleistung $P_2$ eines passiven, monomodalen Mach-Zehnder-Interferometers IF wird durch

$$P_2 \sim \frac{1}{2} P_1 \left[1 + \cos\Delta\varphi\right] \tag{6}$$

beschrieben, wobei $P_1$ die Eingangslichtleistung und $\Delta\varphi$ eine Phasenverschiebung zwischen den beiden Armen des Interferometers IF bedeuten.

Läut eine akustische Oberflächenwelle SAW der Leistung $P_{ac}$ mit der Wellenlänge $\Lambda$ quer durch das Interferometer IF, so tritt zwischen den Interferometerarmen die Phasenverschiebung

$$\Delta\varphi(t) = \emptyset_0 \pm K_1 \ell\, P_{ac}\, \emptyset(t,\, d,\, \Lambda) \tag{7}$$

auf. $\emptyset_0$ ist hierbei eine statische Phasenverschiebung zwischen den beiden Interferometerarmen und $K_1$ ist eine Konstante, die von der Lichtwellenlänge $\Lambda$, den akustooptische sowie im Falle eines piezoelektrischen Substrats auch von den elektrooptischen Eigenschaften des Kristalls abhängen. Die Funktion $\emptyset$ (t, d, $\Lambda$) beschreibt die Phasenlage des Lichts in Abhängigkeit der Zeit t und der Wellenlänge $\Lambda$ der akustischen Oberflächenwelle SAW, sowie dem Abstand d der beiden Wellenleiter.

Für

$$d = (2n+1) \cdot \frac{\Lambda}{2} \qquad (n = 0,1,2...) \qquad (8)$$

tritt ein Maximum der Modulationstiefe auf, im optimalen optischen Arbeitspunkt (R. Keil et al, aaO. sowie auch F.J. Leonberger, Opt. Let. 5, 312 (1980)) bei

$$\emptyset_0 = (2n+1) \frac{\pi}{2} \qquad (9)$$

ist eine lineare Frequenzmodulation möglich.

Das SAWDIF kann aus sämtlichen monomodalen, integriert-optischen Interferometern, z.B. vom Mach-Zehnder-Typ, aufgebaut werden, z.B. entsprechend den Fig. 11, 12, 13, 14, 15 und 16. Die Fig.11, 12 und 13 zeigen das SAWDIF mit einer unterschiedlichen statischen Phasenverschiebung $\emptyset_0$, die in Fig.13 elektrisch gesteuert werden kann. In Fig.14 wird die Y-Verzweigung durch einen aktiven 3 db-Koppler ersetzt, so daß sich die Lichtleistung in den beiden Interferometerarmen genau einstellen läßt, um die höchste Modulationstiefe zu erzielen (R. Keil et al, aaO). Fig.15 und Fig.16 zeigen breitbandige Versionen des SAWDIF: In Fig.15 wird der Abstand d der Wellenleiter kontinuierlich geändert und der zugehörige Interdigital-Wandler IDT strahlt links die niedrigen, rechts die hohen Frequenzen ab. In Fig.16 wird die Phasengeschwindigkeit der akustischen Oberflächenwelle SAW z.B. durch eine Metallauflage (A.A. Oliner, aaO.) zwi-

81 P 8018 E 01

0167970

schen den Interferometerarmen so angepaßt, daß sowohl bei niedrigen als auch bei hohen Frequenzen die maximale Modulationstiefe, wie oben näher ausgeführt, erreicht wird.

Auch beim SAWDIF kann die akustische Oberflächenwelle SAW frei auf dem Substrat laufen oder an einen akustischen Wellenleiter (A.A.. Oliner, aaO.) gebunden sein. Ferner ist auch beim SAWDIF der Resonatorbetrieb der akustischen Oberflächenwelle SAW möglich, der infolge der stehenden Welle einen höheren Wirkungsgrad bei geringer Bandbreite hervorruft. Zur Signalverarbeitung und -formung können auch beim SAWDIF mehrere akustische Oberflächenwellen verwendet werden.

Die Interdigital-Wandler IDT für die näher beschriebenen Ausführungsbeispiele des SAWDIF lassen sich nach den von A.J. Slobodnik, Jr., aaO. und von A.A. Oliner, aaO. genannten Verfahren aufbauen und optimieren. Je nach Anwendung werden ein bzw. zwei Interdigital-Wandler IDT sowie ein Reflektor (A.A. Oliner, aaO.) benötigt.

Ein Anwendungsgebiet des SAWDIF ist die Amplitudenmodulation in einem weiten Frequenzbereich. Entsprechend dem vorne gezeigten Zusammenhang wird die dem Interdigital-Wandler IDT zugeführte Frequenz, sofern sie innerhalb der Bandbreite des Interdigital-Wandlers IDT liegt, linear in eine optische Leistungsmodulation umgesetzt, wobei bei entsprechender Dimensionierung eine große Bandbreite und ein guter Modulationshub gewährleistet ist. Hierbei entspricht entweder die akustische Oberflächenwelle SAW direkt dem Nachrichtensignal oder das Nachrichtsignal ist in der akustischen Oberflächenwelle SAW enthalten.

0167970
81 P 8018 E 01

Das SAWDIF bietet gegenüber elektrooptischen Modulatoren den Vorteil, daß einerseits während der Fertigung keine aufwendige Justierung des Interdigital-Wandlers IDT in bezug auf die Wellenleiter erforderlich ist und zum anderen, daß eine einzige akustische Oberflächenwelle SAW viele Mach-Zehnder-Interferometer modulieren kann.

10 Patentansprüche
16 Figuren

Patentansprüche

1. Optischer Modulator aus mindestens einem passiven optischen Richtkoppler und mindestens einer Vorrichtung, welche akustische Oberflächenwellen erzeugt, die den Richtkoppler modulieren, d a d u r c h   g e k e n n - z e i c h n e t , daß die Wellenleiter des optischen Richtkopplers in der Koppelstrecke gekrümmt verlaufen.

2. Modulator nach Anspruch 1, d a d u r c h   g e - k e n n z e i c h n e t , daß die Wellenleiter des optischen Richtkopplers gegeneinander gekrümmt sind.

3. Modulator nach Anspruch 1 oder 2, d a d u r c h   g e k e n n z e i c h n e t , daß die Wellenleiter des optischen Richtkopplers in der Koppelstrecke einen Abstand voneinander aufweisen, der gleich der akustischen Wellenlänge oder einem ganzzahligen Vielfachen davon ist.

4. Modulator nach einem der Ansprüche 1 bis 3, d a - d u r c h   g e k e n n z e i c h n e t , daß die Wellenleiter des optischen Richtkopplers in der Koppelstrecke einen Abstand voneinander aufweisen, der gleich der halben akustischen Wellenlänge oder einem ungeradzahligen ganzzahligen Vielfachen davon ist.

5. Modulator nach einem der Ansprüche 1 bis 4, g e - k e n n z e i c h n e t   d u r c h   die Kopplung mit mindestens einem elektrooptischen Richtkoppler-Modulator.

6. Modulator nach Anspruch 5, g e k e n n z e i c h - n e t   d u r c h   die Kopplung mit einem $\Delta\beta$ -Reversal- Koppler.

7. Modulator nach einem der Ansprüche 1 bis 6, d a -
d u r c h   g e k e n n z e i c h n e t , daß die Vorrichtung, welche akustische Oberflächenwellen erzeugt,
so ausgestaltet ist, daß sie eine frei auf dem Substrat
laufende akustische Oberflächenwelle erzeugt.

8. Modulator nach einem der Ansprüche 1 bis 7, d a -
d u r c h   g e k e n n z e i c h n e t , daß die Vorrichtung, welche akustische Oberflächenwellen erzeugt,
einen akustooptischen Wellenleiter aufweist, an den eine
erzeugte akustische Oberflächenwelle gebunden ist.

9. Modulator nach einem der Ansprüche 1 bis 8, d a -
d u r c h   g e k e n n z e i c h n e t , daß die Vorrichtung, welche akustische Oberflächenwellen erzeugt,
so bemessen ist, daß eine von ihr erzeugte akustische
Oberflächenwelle eine stehende Welle ist.

10. Verwendung eines Modulators nach einem der Ansprüche
1 bis 9 zur Modulation und Demodulation im Frequenzmultiplex.

FIG 1

FIG 2

FIG 3

FIG 4

FIG 5

FIG 6

FIG 7

FIG 8

## FIG 9

IDT

IF

d

IDT

$\vdash\!\!\!-\;l\;-\!\!\!\dashv$

## FIG 10

d

Λ

FIG 11

IDT

FIG 12

IDT

FIG 13

IDT

FIG 14

IDT

FIG 15

IDT

FIG 16

IDT

**Europäisches Patentamt**

**EUROPÄISCHER RECHERCHENBERICHT**

**0167970**
Nummer der Anmeldung

EP 85 10 8189

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | JAPANESE JOURNAL OF APPLIED PHYSICS, Band 17, Nr. 7, Juli 1978, Seiten 1231-1243, Tokyo, JP; T. KONDO u.a.: "Optical tunable switched directional couplers consisting of two thin-film waveguides using surface acoustic waves" * Zusammenfassung * --- | 1 | G 02 F 1/33 |
| A | US-A-3 850 503 (L.A. RISEBERG u.a.) * Zusammenfassung * ----- | 1 | |

RECHERCHIERTE SACHGEBIETE (Int. Cl.4)

G 02 F

Der vorliegende Recherchenbericht wurde für alle Patentansprüche erstellt.

| Recherchenort | Abschlußdatum der Recherche | Prüfer |
|---|---|---|
| DEN HAAG | 25-09-1985 | GALANTI M. |